(19) Europäisches Patentamt
European Patent Office
Office européen des brevets

(11) **EP 2 699 445 B1**

(12) **FASCICULE DE BREVET EUROPEEN**

(45) Date de publication et mention
de la délivrance du brevet:
**17.06.2015 Bulletin 2015/25**

(21) Numéro de dépôt: **12715973.9**

(22) Date de dépôt: **17.04.2012**

(51) Int Cl.:
***B60L 5/22*** *(2006.01)*

(86) Numéro de dépôt international:
**PCT/EP2012/057017**

(87) Numéro de publication internationale:
**WO 2012/143357 (26.10.2012 Gazette 2012/43)**

(54) **PANTOGRAPHE POUR VÉHICULE FERROVIAIRE**

SCHERENSTROMABNEHMER FÜR EIN SCHIENENFAHRZEUG

PANTOGRAPH FOR A RAILWAY VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.04.2011 FR 1153504**

(43) Date de publication de la demande:
**26.02.2014 Bulletin 2014/09**

(73) Titulaire: **SNCF MOBILITÉS**
**93200 Saint-Denis (FR)**

(72) Inventeur: **MASSAT, Jean-Pierre**
**F-75013 Paris (FR)**

(74) Mandataire: **Bringer, Mathieu et al
GEVERS FRANCE
9, rue Saint Antoine du T
31000 Toulouse (FR)**

(56) Documents cités:
**AT-B- 219 652       DE-B- 1 073 532
GB-A- 1 437 670       US-A- 5 954 171**

## Description

Le domaine de l'invention est celui des pantographes pour véhicules ferroviaires. L'invention vise à proposer un pantographe dont le comportement dynamique est amélioré.

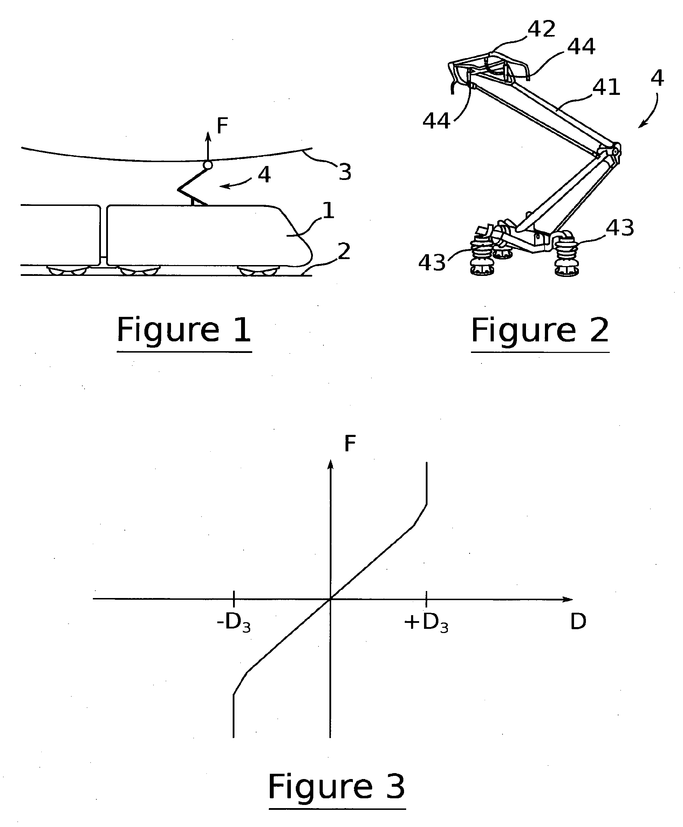

En référence à la figure 1, un véhicule ferroviaire 1 circule de manière classique sur des rails de chemin de fer 2 et est alimenté par une caténaire qui comprend, de manière classique, des supports verticaux soutenant un fil de contact 3 qui s'étend au-dessus des rails de chemin de fer 2. Les supports de la caténaire sont espacés de quelques dizaines de mètres et supportent un câble porteur auquel est suspendu le fil de contact 3 par l'intermédiaire de pendules. Un pantographe 4 est un dispositif installé sur le toit de la motrice électrique du véhicule ferroviaire 1 pour capter le courant électrique circulant dans le fil de contact 3 afin d'alimenter la motrice en énergie électrique au cours de son déplacement sur les rails 2.

Sous l'effet de la gravité et de l'écartement de ses points de suspension, le fil de contact 3 présente une forme de chaînette entre les pendules. De ce fait, la hauteur entre le toit de la motrice du véhicule ferroviaire 1 et le fil de contact 3 varie au cours du déplacement du véhicule 1. Une première fonction du pantographe 4 consiste à compenser les variations de hauteur pour que le pantographe 4 soit toujours en contact avec le fil de contact 3. Une deuxième fonction du pantographe 4 consiste à appliquer un effort de contact F calibré sur le fil de contact 3 en fonction de la vitesse du véhicule ferroviaire 1 pour permettre un captage optimal du courant. A cet effet, le pantographe 4 comporte différents étages de suspension de manière à ce que l'effort de contact F du pantographe 4 sur le fil de contact 3 soit maîtrisé afin d'éviter tout défaut de captage (effort de contact insuffisant) ou toute usure précoce du fil de contact 3 de la caténaire (effort de contact excessif).

Comme représenté à titre d'exemple sur la figure 2, un pantographe 4 comporte de manière classique une partie inférieure, connue de l'homme du métier sous la désignation de grand cadre 41, dont la base est reliée au toit de la motrice et une partie supérieure, connue de l'homme du métier sous la désignation d'archet 42, qui est reliée à la tête du cadre 41 et qui est destinée à venir en contact avec le fil de contact 3 de la caténaire.

Le pantographe 4 comporte de manière classique une suspension pneumatique de cadre 43 comportant un coussin pneumatique permettant le dépliement et le repliement du cadre 41 sur le toit de la motrice. La suspension pneumatique de cadre 43 permet de compenser des variations de hauteur du fil de contact 3 de grande amplitude et de basse fréquence, de l'ordre de 1 à 2 Hz. Ainsi, lorsque la suspension pneumatique de cadre 43 est activée, le cadre 41 est entraîné en rotation et se déploie pour venir appuyer l'archet 42 sur le fil de contact 3 de la caténaire. De manière classique, la pression pneumatique de la suspension pneumatique de cadre 43 est asservie à la vitesse du véhicule ferroviaire 1.

L'archet 42 est monté sur la tête du cadre 41 du pantographe 4 par l'intermédiaire de deux suspensions d'archet connues de l'homme du métier sous la désignation de boîtes à ressorts 44. A titre d'exemple, on connaît par la demande de brevet FR2883809 A1 de la société SNCF un dispositif de suspension d'archet comportant des ressorts. Les boîtes à ressorts 44 forment un deuxième étage de suspension permettant de compenser des variations de hauteur du fil de contact 3 de faible amplitude et de haute fréquence, supérieure à 10 Hz.

Une boîte à ressorts 44 s'étend globalement verticalement et comporte de manière classique un cylindre de boîte qui est solidaire du cadre 41 du pantographe 4 ainsi qu'un piston, solidaire de l'archet 42, monté en translation dans ledit cylindre. Le piston comporte une tige reliée d'une part à l'archet 42 et d'autre part à une palette circulaire montée dans le cylindre, la palette du piston étant adaptée pour se déplacer en translation verticale entre les extrémités du cylindre. Les extrémités du cylindre forment des butées et sont référencées -D3, +D3 sur la figure 3 représentant l'effort de contact F de l'archet 42 sur le fil de contact 3 en fonction du déplacement D du piston.

Pour amortir les mouvements de l'archet 42, la palette du piston est reliée à deux ressorts mécaniques de forte raideur, de l'ordre de 3000 N/m qui sont précontraints dans le cylindre. Comme représenté sur la figure 3, la boîte à ressort 44 selon l'art antérieur présente une raideur globale non linéaire, la raideur correspondant à la pente de la courbe d'effort de contact F de la figure 3. Comme représenté sur la figure 3, la raideur de la boîte à ressorts 44 varie selon le déplacement du piston dans le cylindre entre les position de butée -D3, +D3 , la raideur de la boîte à ressorts 44 étant linéaire « par morceaux » au sens mathématique.

Pour garantir un captage efficace du courant par l'archet 42, il est nécessaire de dimensionner la raideur de la boîte à ressorts 44 en fonction de l'effort de contact moyen, la masse de l'archet 42 et du débattement maximal admissible (longueur du cylindre) de la boîte à ressorts 44. Actuellement, la raideur globale des boîtes à ressort 44 selon l'art antérieur est élevée de manière à ce que l'effort de contact F du pantographe 4 soit conforme aux normes établies et n'entre pas en butée avec les extrémités du cylindre. Cette raideur élevée présente l'inconvénient d'entraîner un couplage important entre le cadre 41 et l'archet 42 du pantographe 4. Autrement dit, pour des variations faibles de la hauteur du fil de contact 3, l'archet 42 et le cadre 41 sont susceptibles de se déplacer simultanément ce qui présente des inconvénients sur le plan dynamique.

Afin d'éliminer cet inconvénient, il a été proposé par le brevet FR 2 740 741 B1 d'ajouter un ressort de correction se présentant sous la forme d'aimants permanents afin de limiter la raideur de la boîte à ressorts et ainsi améliorer le découplage entre le cadre et l'archet du pantographe. En pratique, cette solution est difficile à mettre en oeuvre, les aimants permanents présentant un coût de fabrication élevé. Par ailleurs, leur fiabilité peut être affectée par les conditions météorologiques.

Dans le domaine ci-dessus, il est connu de mettre en oeuvre des suspensions d'archets tels que ceux décrits dans les demandes US 595 4171 A, AT 219 652 B, DE 1 076 532 B, ou bien encore dans la demande GB 1 437 670 A.

L'invention a pour but d'éliminer au moins certains des inconvénients cités ci-dessus. La présente invention est définie par un pantographe selon la revendication 1. Des modes avantageux de réalisation sont précisés dans les revendications dépendantes.

Un vérin pneumatique possède une raideur nulle ce qui permet de compenser de manière efficace les oscillations de faible amplitudes de l'archet sans les transmettre au cadre du pantographe, le cadre et l'archet étant alors découplés ce qui améliore le comportement dynamique du pantographe. En outre, un vérin pneumatique présente une bonne résistance aux vibrations ainsi qu'aux conditions extérieures (pluie, gel, etc.) ce qui permet son utilisation sur un plan industriel.

Le vérin pneumatique comporte un cylindre solidaire du cadre et un piston solidaire de l'archet monté en translation dans ledit cylindre de manière à diviser le volume du cylindre entre une chambre pneumatique supérieure et une chambre pneumatique inférieure, chaque chambre pneumatique comportant un gaz sous pression amortissant le déplacement du piston.

Le vérin pneumatique permet, grâce à ses chambres pneumatiques, d'amortir les oscillations de l'archet aussi bien lors de la montée que lors de la descente de l'archet.

De préférence encore, au moins une des chambres pneumatiques comporte un ressort mécanique afin de compenser des oscillations de moyenne amplitude sans les transmettre au cadre du pantographe, le cadre et l'archet étant alors découplés ce qui améliore le comportement dynamique du pantographe. De préférence, chaque chambre pneumatique comporte un ressort mécanique.

De manière préférée, ledit ressort mécanique est monté libre dans ladite chambre pneumatique, c'est-à-dire, sans précontrainte. Ainsi, le piston est libre de se déplacer dans le cylindre sans solliciter la raideur du ressort mécanique. Le vérin pneumatique possède ainsi plusieurs niveaux de raideur. De préférence, un ressort mécanique est monté libre dans chaque chambre pneumatique.

De préférence, ledit ressort mécanique possède une raideur comprise entre 500 et 1500 N/m, de préférence, égale à 600 N/m. Du fait de l'amortissement pneumatique, le ressort possède avantageusement une raideur plus faible qu'une boîte à ressorts traditionnelle qui est de l'ordre de 3000 N/m. Un ressort avec une telle raideur permet d'améliorer le comportement dynamique du pantographe en augmentant le découplage entre l'archet et le cadre. De préférence, les raideurs de chaque ressort mécanique sont identiques. On bénéficie avantageusement d'une raideur faible sans augmenter la course de l'archet.

De préférence, au moins une desdites chambres pneumatiques comporte au moins une ouverture d'alimentation pneumatique ménagée dans ledit cylindre. De préférence chacune des chambres pneumatiques comporte au moins une ouverture d'alimentation pneumatique ménagée dans le cylindre.

Selon un aspect de l'invention, la pression pneumatique dans le vérin pneumatique est configurée pour exercer un effort de contact prédéterminé sur le fil de contact. De manière avantageuse, on ajuste l'effort de contact en commandant la pression pneumatique. De préférence, la pression pneumatique est fonction de la vitesse du véhicule ferroviaire ce qui permet d'améliorer le captage du courant.

De préférence, le piston étant à une position de référence dans ledit cylindre pour ledit effort de contact prédéterminé, le vérin pneumatique est configuré pour amortir de manière pneumatique un déplacement du piston autour de sa position de référence sur une plage centrale de déplacement prédéterminée. Ainsi, le vérin pneumatique permet d'amortir de manière pneumatique des oscillations de l'archet de faible amplitude autour de la position de référence. Une telle plage de déplacement possède une raideur nulle ce qui améliore le comportement dynamique du pantographe.

De préférence, le vérin pneumatique est configuré pour amortir de manière pneumatique et mécanique un déplacement du piston en dehors de la plage centrale de déplacement déterminée. Ainsi, le piston est libre de se déplacer dans le cylindre sans solliciter de raideur mécanique sur la plage centrale, la raideur mécanique étant uniquement utilisée en appoint de l'amortissement pneumatique. Le vérin pneumatique possède ainsi plusieurs niveaux de raideur.

Selon un autre aspect de l'invention, le pantographe comportant une suspension pneumatique de cadre agencé pour déplacer le cadre par rapport au véhicule ferroviaire, le pantographe comporte un premier circuit pneumatique reliant la suspension pneumatique de cadre au vérin pneumatique. On peut avantageusement utiliser l'alimentation pneumatique de la suspension mécanique de cadre pour alimenter le vérin pneumatique ce qui permet de former un pantographe dont l'encombrement est réduit. Cela est très avantageux lorsque la pression pneumatique de la suspension pneumatique de cadre est asservie à la vitesse de circulation du véhicule ferroviaire, le vérin pneumatique bénéficiant alors de cet asservissement.

De préférence, l'archet comportant un dispositif pneumatique de détection de choc, le pantographe comporte un deuxième circuit pneumatique reliant le dispositif pneumatique de détection de choc au vérin pneumatique. On tire ainsi partie du circuit d'alimentation pneumatique existant en le détournant de sa fonction première pour alimenter le vérin pneumatique. On peut ainsi optimiser des pantographes existants en réalisant un nombre restreint de modifications structurelles.

L'invention sera mieux comprise à la lecture de la description qui va suivre, donnée uniquement à titre d'exemple, et se référant aux dessins annexés sur lesquels :

- la figure 1 est une représentation schématique d'un véhicule ferroviaire circulant sur des rails de chemin de fer, un pantographe étant monté sur le toit du véhicule ;
- la figure 2 est une représentation en perspective d'un pantographe selon l'art antérieur ;
- la figure 3 représente l'évolution de l'effort de contact d'un archet de pantographe selon l'art antérieur sur un fil de contact d'une caténaire en fonction du débattement vertical de l'archet ;
- la figure 4 est une représentation schématique d'un pantographe selon l'invention ;
- la figure 5a est une vue en coupe schématique d'une suspension d'archet d'un pantographe selon l'invention ;
- la figure 5b représente l'évolution de la raideur apparente de ladite suspension pneumatique en fonction du débattement vertical de l'archet ; et
- la figure 6 est une vue en coupe schématique d'une autre forme de réalisation de la suspension d'archet.

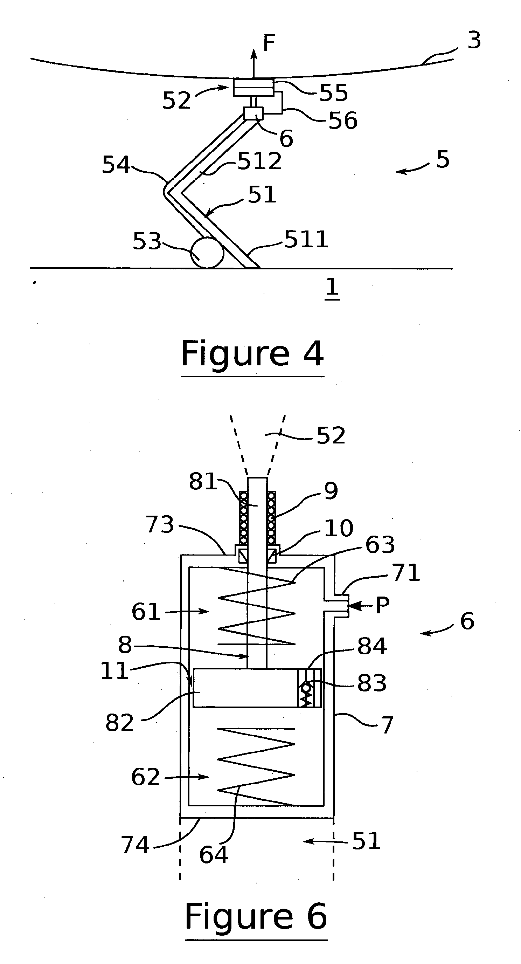

En référence à la figure 4, un pantographe 5 selon l'invention comporte un cadre 51 monté sur le toit d'une motrice de véhicule ferroviaire 1 et un archet 52, relié audit cadre 51, en contact avec un fil de contact 3 d'une caténaire s'étendant au-dessus des rails de chemin de fer sur lesquels le véhicule ferroviaire 1 se déplace. Dans cet exemple, le cadre 51 du pantographe 5 est articulé et comporte une partie inférieure 511 couramment désignée « grand cadre » et une partie supérieure 512 couramment désignée « petit cadre ». Un tel cadre 51 de pantographe 5 est classique et connu de l'homme du métier.

Le pantographe 5 comporte une suspension pneumatique de cadre 53, ici un coussin pneumatique 53, agencé pour déployer et replier le cadre 51 du pantographe 5 par rapport au toit du véhicule ferroviaire 1. La suspension pneumatique de cadre 53 permet de compenser les variations de hauteur de forte amplitude et de faible fréquence (de l'ordre de 1 à 2 Hz) entre le toit du véhicule ferroviaire 1 et le fil de contact 3 de la caténaire. La pression pneumatique dans le coussin pneumatique 53 est de préférence asservie à la vitesse du véhicule ferroviaire 1 de manière à ce que l'effort de contact F du pantographe 5 sur le fil de contact 3 soit de plus en plus important au fur et à mesure que la vitesse augmente conformément aux normes en vigueur. A titre d'exemple, les normes actuelles imposent un effort de contact moyen Fmoy du pantographe 5 sur le fil de contact 3 de l'ordre de 150N pour une vitesse de 300 km/h.

Comme représenté sur la figure 4, le pantographe 5 comporte une suspension d'archet, reliant l'archet 52 au sommet du cadre 51, pour compenser les écarts de faible amplitude et de haute fréquence, c'est-à-dire, supérieure à 10 Hz. La suspension d'archet selon l'invention se présente sous la forme de deux vérins pneumatiques 6, chaque vérin pneumatique 6 ayant un encombrement identique à celui d'une boîte à ressorts selon l'art antérieur de manière à pouvoir être monté sur des pantographes existants en lieu et place des boîtes à ressorts existantes.

Dans cet exemple, le pantographe 5 comporte un premier circuit d'alimentation pneumatique 54 reliant les vérins pneumatiques 6 au coussin pneumatique 53. Ainsi, on bénéficie de l'asservissement existant pour le coussin pneumatique 53 pour commander la pression pneumatique P dans les vérins pneumatiques 6. A cet effet, le premier circuit d'alimentation pneumatique 54 peut comprendre un détendeur (non représenté) de manière à adapter la pression pneumatique du coussin pneumatique 53 à la pression P des vérins pneumatiques 6.

De préférence, l'archet 52 comporte un dispositif pneumatique de détection de choc 55 (Figure 4) adapté pour replier le pantographe 5 lorsqu'un choc est reçu par l'archet 52. Un tel dispositif de sécurité, connu de l'homme du métier, se présente sous la forme d'une conduite pneumatique s'étendant selon la longueur de l'archet 52 et est reliée à la suspension pneumatique de cadre 53. En cas de choc sur l'archet 52, la conduite pneumatique se perce ce qui diminue la pression pneumatique dans la suspension pneumatique de cadre 53 et entraîne le repliement du cadre de pantographe 51 sur le toit de la motrice. Selon l'invention, en référence à la figure 4, le pantographe 5 comporte un deuxième circuit pneumatique 56 reliant le dispositif pneumatique de détection de choc 55 aux vérins pneumatiques 6. Ainsi, on tire partie du circuit pneumatique d'alimentation existant pour alimenter les vérins pneumatiques 6 ce qui simplifie leur intégration dans le pantographe 5 en lieu et place des boîtes à ressorts de l'art antérieur.

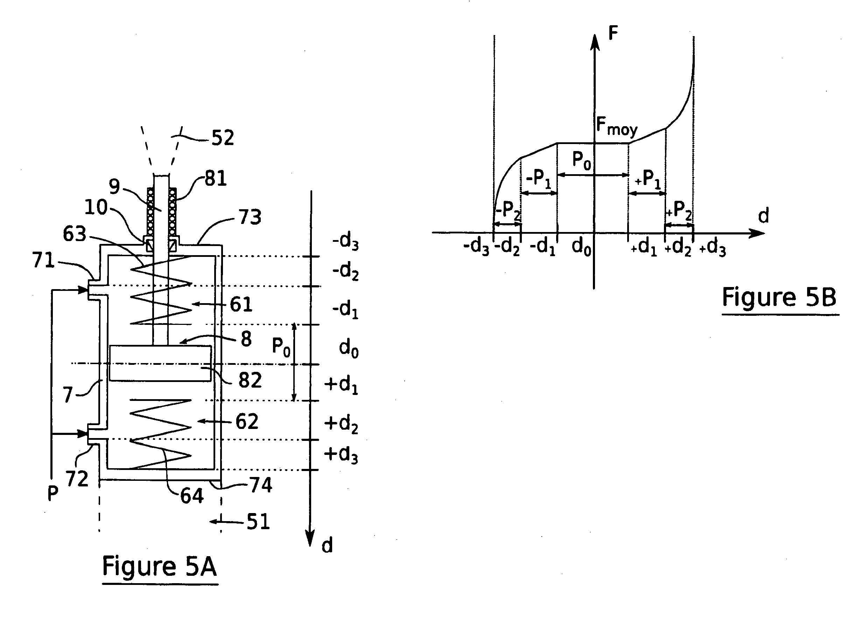

En référence à la figure 5a représentant une vue en coupe d'un vérin pneumatique 6 selon l'invention, chaque vérin pneumatique 6 comporte un cylindre de vérin 7 solidaire du cadre de pantographe 51 et un piston 8, monté en translation dans ledit cylindre 7, qui est solidaire de l'archet de pantographe 52.

Le cylindre de vérin 7 s'étend selon la direction verticale et possède une section transversale circulaire. Le piston de vérin 8 comporte, pour sa part, une tige 81 reliée à une palette circulaire 82 montée dans ledit cylindre 7, la tige 81 étant adaptée pour se déplacer en translation verticale hors du cylindre 7 depuis la face horizontale supérieure 73 du cylindre 7 (Figure 5a). Le guidage de la tige 81 en translation verticale est assuré, dans cet exemple, par une cage à billes 9 solidaire de la face supérieure 73 du cylindre 7 comme représenté sur la figure 5a. Il va de soi que le guidage de la tige 81

---

pourrait être réalisé par divers moyens.

La course du piston 8 dans le cylindre 7, référencée d sur la figure 5b, est bornée par les faces d'extrémité 73, 74 du cylindre 7, une position médiane de référence d0 étant définie à mi-hauteur du cylindre 7 comme représenté sur la figure 5a. La palette 82 du piston 8 permet de définir dans le cylindre 7 une chambre pneumatique supérieure 61, entre la palette 82 et la face supérieure 73 du cylindre 7, et une chambre pneumatique inférieure 62, entre la palette 82 et la face inférieure 74 du cylindre 7. La pression P de gaz, ici de l'air, dans les différentes chambres 61, 62 est commandée de manière à autoriser un amortissement lors de la montée et de la descente du piston 8 dans le cylindre 7.

Dans cet exemple, la pression de gaz P est identique dans la chambre supérieure 61 et la chambre inférieure 62 du vérin pneumatique 6 qui possèdent un volume identique lorsque la palette du piston 82 est dans la position médiane de référence d0 comme représenté sur la figure 5a. Etant donné que la tige du piston 81 s'étend dans la chambre supérieure 61 du cylindre 7, le volume disponible pour le gaz dans la chambre supérieure 61 est plus faible que dans la chambre inférieure 62. On en déduit que l'effort de poussée vertical ascendant F appliqué sur la palette du piston 82 (c'est-à-dire l'effort de contact F de l'archet 52) obéit à l'équation suivante :

$$F = P.(S-s)$$

équation dans laquelle :

- P correspond à la pression de l'air dans chaque chambre 61, 62 ;
- S correspond à la surface de la section transversale du cylindre 7 ; et
- s correspond à la surface de la section transversale de la tige 81.

Le vérin pneumatique 6 permet avantageusement de commander l'effort de contact F en fonction de la pression de l'air P dans chaque chambre 61, 62. De préférence, la pression pneumatique P dans le vérin pneumatique 6 est configurée pour exercer un effort de contact prédéterminé Fmoy sur le fil de contact 3 lorsque la palette 82 est dans la position médiane de référence d0. On peut ainsi avantageusement asservir la pression pneumatique P à la vitesse du véhicule ferroviaire 1 pour améliorer le captage et ainsi améliorer le découplage entre le cadre 51 et l'archet 52 lorsque la vitesse du véhicule ferroviaire 1 augmente. A titre d'exemple, la courbe de la figure 5b représente un effort de contact Fmoy de 150 N appliquée par l'archet 52 en position médiane d0 lorsque le véhicule ferroviaire 1 circule à 300 km/h.

Grâce aux vérins pneumatiques 6, toute variation de hauteur de faible amplitude est amortie de manière pneumatique. Chaque vérin pneumatique 6 compense le débattement vertical du piston 8 qui est solidaire de l'archet 52, le cylindre du vérin 7 qui est solidaire du cadre 51 demeurant fixe. L'archet 52 et le cadre 51 sont alors découplés.

En référence à la figure 5a, chaque vérin pneumatique 6 comporte en outre dans chaque chambre pneumatique 61, 62 un ressort mécanique 63, 64 monté à une extrémité du cylindre du vérin 7. Ainsi, chaque vérin pneumatique 6 comporte un ressort mécanique supérieur 63 dans la chambre supérieure 61 qui est relié à la face supérieure 73 du cylindre 7 et un ressort mécanique inférieur 64 dans la chambre inférieure 62 qui est relié à la face inférieure 74 du cylindre 7.

Chaque ressort mécanique 63, 64 est monté sans contrainte dans sa chambre pneumatique 61, 62 et ne vient pas en contact avec la palette du piston 82 lorsque la palette 82 est à sa position médiane de référence d0. Dans cet exemple, les ressorts mécaniques inférieur 64 et supérieur 63 sont identiques et possèdent une longueur au repos inférieure à la moitié de la hauteur du cylindre 7 de manière à définir une plage centrale P0, centrée autour de la position médiane de référence d0 de la palette 82, dans laquelle la palette 82 peut se déplacer verticalement sans entrer en contact avec les ressorts supérieur 63 ou inférieur 64 comme représenté sur la figure 5a. Cette plage centrale P0 est limitée en position -d1 par l'extrémité inférieure du ressort supérieur 63 et en position +d1 par l'extrémité supérieure du ressort inférieur 64 comme représenté sur la figures 5a et 5b.

En référence à la figure 5b représentant l'effort de contact F du vérin pneumatique en fonction de la course du piston 7, la raideur du vérin pneumatique, qui correspond à la pente de l'effort de contact F, est nulle sur la plage centrale P0 ce qui améliore le comportement dynamique du pantographe 5.

Dans cet exemple, la raideur des ressorts mécaniques supérieur 63 et inférieur 64 est de l'ordre de 500 à 1500 N/m, de préférence 600 N/m, ce qui est faible par comparaison à la raideur des ressorts mécaniques selon l'art antérieur qui est de l'ordre de 3000 N/m. De tels ressorts mécaniques 63, 64 de faible raideur permettent de compenser toute variation de hauteur du fil de contact 3 dont l'amplitude est supérieure à la plage centrale Po. De tels ressorts 63, 64 permettent de favoriser un découplage du cadre 51 et de l'archet 52 pour des variations d'amplitude moyenne ce qui améliore le comportement dynamique du pantographe 5. En effet, la pression pneumatique P du vérin pneumatique 6 permet d'éviter de recourir à des ressorts de raideur importante qui pénalisent le comportement dynamique du pantographe 5. De manière préférée, les ressorts supérieur 63 et inférieur 64 possèdent la même raideur mais il va de soi que les raideurs pourraient être différentes pour favoriser un mouvement ascendant ou descendant de l'archet 52.

Comme représenté sur la figure 5a, les chambres supérieur 61 et inférieure 62 sont respectivement alimentées en gaz via des ouvertures d'alimentation 71, 72 ménagées respectivement dans la paroi verticale du cylindre 7 à des distances d'alimentation -d2, +d2 définies par rapport à la position médiane de référence d0 de la palette 82 dans le cylindre 7. Ainsi, lorsque la palette 82 s'écarte de la position médiane d'une distance supérieure aux distances d'alimentation d2, la palette 82 vient en butée contre les faces d'extrémité 73, 74 du cylindre 7 aux positions de butée supérieure -d3 et inférieure +d3 comme représenté sur les figures 5a et 5b.

En référence plus particulièrement à la figure 5b, le vérin pneumatique 6 définit plusieurs plages d'effort de contact pour amortir les débattements de l'archet 52 :

- une plage centrale P0, définie entre -d1/+d1, essentiellement pneumatique avec une raideur nulle, l'effort de contact Fmoy étant déterminé par la pression pneumatique dans les chambres 61, 62 ;
- une plage de ressort positive +P1, définie entre +d1/+d2, combinant un amortissement pneumatique à une raideur faible correspondant à la raideur du ressort inférieur 64 situé dans la chambre inférieure 62 ;
- une plage de ressort négative -P1, définie entre -d2/-d1, combinant un amortissement pneumatique à une raideur faible correspondant à la raideur du ressort supérieur 63 situé dans la chambre supérieure 61 ;
- une plage de butée positive +P2, définie entre +d2/+d3, combinant un amortissement pneumatique des deux ouvertures d'alimentation 71, 72 à la raideur du ressort inférieur 64 situé dans la chambre inférieure 62 ; et
- une plage de butée négative -P2, définie entre -d3/-d2, combinant un amortissement pneumatique des deux ouvertures d'alimentation 71, 72 à la raideur du ressort supérieur 63 situé dans la chambre supérieure 61.

Les plages de butée +P2, -P2 permettent d'assurer une transition entre l'effort de contact induit par la raideur des ressorts mécaniques 63, 64 et l'effort de contact en butée contre les faces d'extrémité 73, 74 du cylindre de vérin 7.

Il a été présenté un vérin pneumatique 6 dont les pressions dans les chambres pneumatiques 61, 62 sont identiques. Il va de soi que les pressions dans les chambres pneumatiques 61, 62 pourraient être différentes et pilotées de manière indépendante afin de minimiser les fluctuations de l'effort de contact du pantographe 5.

Il a été présenté un vérin pneumatique 6 dont chaque chambre 61, 62 est alimentée par une ouverture d'alimentation 71, 72. Il va de soi que l'alimentation pneumatique du vérin 6 pourrait être différente. A titre d'exemple, en référence à la figure 6, un jeu 11 pourrait être ménagé entre la palette du piston 82 et la surface intérieure du cylindre 7 pour autoriser un débit de fuite entre les deux chambres 61, 62, seule une des deux chambres 61, 62 étant alors alimentée. Le débit de fuite est alors dimensionné pour obtenir l'amortissement recherché. De manière préférée, un clapet anti-retour taré 83 (figure 6) est monté dans une ouverture verticale 84 de la palette 82 de manière à améliorer la dynamique de l'amortissement, l'amortissement étant de préférence visqueux.

Un vérin pneumatique 6 avec des ressorts mécaniques 63, 64 selon l'invention permet non seulement d'obtenir la raideur souhaitée pour la suspension de l'archet 52 mais également de régler l'amortissement de cette suspension. L'amortissement est un paramètre qui influence fortement le comportement dynamique du pantographe 5 lors de son interaction avec un fil de contact 3 d'une caténaire. L'amortissement peut être avantageusement paramétré en solidarisant un joint 10 dans la face supérieure 73 du cylindre 7 comme représenté sur la figure 6, la tige du piston 81 se translatant verticalement dans ledit joint 10 avec un frottement qui est de préférence sec. Le matériau du joint 10, par exemple de l'élastomère ou du graphite, est choisi en fonction de l'amortissement recherché. Un jeu 11 peut également être ménagé entre la palette du piston 82 et la surface intérieure du cylindre 7 pour autoriser un débit de fuite entre les deux chambres 61, 62 afin d'obtenir un amortissement visqueux. De même, un clapet anti-retour 83 peut aussi être monté dans une ouverture verticale 84 de la palette 82 de manière à favoriser un amortissement différent à la montée ou à la descente du piston 8 dans le cylindre 7.

## Revendications

1. Pantographe (5) de transmission d'énergie électrique entre un fil de contact (3) et un véhicule ferroviaire (1), le pantographe (5) comportant au moins un cadre (51) destiné à être monté sur le véhicule ferroviaire (1), un archet (52) destiné à entrer en contact avec le fil de contact (3) et une suspension d'archet montée entre le cadre (51) et ledit archet (52), pantographe **caractérisé par le fait que** la suspension d'archet comporte au moins un vérin pneumatique (6) comportant un cylindre (7) solidaire du cadre (51) et un piston (8) solidaire de l'archet (52) monté en translation dans ledit cylindre (7) de manière à diviser le volume du cylindre (7) entre une chambre pneumatique supérieure (61) et une chambre pneumatique inférieure (62), chaque chambre pneumatique (61, 62) comportant un gaz sous pression amortissant le déplacement du piston (8).

2. Pantographe selon la revendication 1, dans lequel au moins une des chambres pneumatiques (61, 62) comporte un ressort mécanique (63, 64).

3. Pantographe selon la revendication 2, dans lequel ledit ressort mécanique (63, 64) est monté libre dans ladite chambre pneumatique (61, 62).

**4.** Pantographe selon l'une des revendications 2 à 3, dans lequel ledit ressort mécanique (63, 64) possède une raideur comprise entre 500 et 1500 N/m, de préférence, égale à 600 N/m.

**5.** Pantographe selon l'une des revendications 1 à 4, dans lequel au moins une desdites chambres pneumatiques (61, 62) comporte au moins une ouverture d'alimentation pneumatique (71, 72) ménagée dans ledit cylindre (7).

**6.** Pantographe selon l'une des revendications 1 à 5, dans lequel la pression pneumatique dans le vérin pneumatique (6) est configurée pour exercer un effort de contact prédéterminé (Fmoy) sur le fil de contact (3).

**7.** Pantographe selon la revendication 6, dans lequel, le piston (8) étant à une position de référence (d0) dans ledit cylindre (7) pour ledit effort de contact prédéterminé (Fmoy), le vérin pneumatique (6) est configuré pour amortir de manière pneumatique un déplacement du piston (8) autour de sa position de référence (d0) sur une plage centrale (P0) de déplacement prédéterminée.

**8.** Pantographe selon la revendication 7, dans lequel, le vérin pneumatique (6) est configuré pour amortir de manière pneumatique et mécanique un déplacement du piston (8) en dehors de la plage centrale (P0) de déplacement déterminée.

**9.** Pantographe selon l'une des revendications 1 à 8, dans lequel, le pantographe (5) comportant une suspension pneumatique de cadre (53) agencée pour déplacer le cadre (51) par rapport au véhicule ferroviaire, le pantographe (5) comporte un premier circuit pneumatique (54) reliant la suspension pneumatique de cadre (53) au vérin pneumatique (6).

**10.** Pantographe selon l'une des revendications 1 à 9, dans lequel, l'archet (52) comportant un dispositif pneumatique de détection de choc (55), le pantographe (5) comporte un deuxième circuit pneumatique (56) reliant le dispositif pneumatique de détection de choc (55) au vérin pneumatique (6).


**Patentansprüche**

**1.** Stromabnehmer (5) zur elektrischen Energieübertragung zwischen einem Kontaktdraht (3) und einen Schienenfahrzeug (1), wobei der Stromabnehmer (5) zumindest einen Rahmen (51), der vorgesehen ist, auf dem Schienenfahrzeug (1) montiert zu werden, einen Bügel (52), der vorgesehen ist, in Kontakt mit Kontaktdraht (3) zu treten, und eine Bügelfederung umfasst, die zwischen dem Rahmen (51) und dem Bügel (52) angebracht ist, **dadurch gekennzeichnet, dass** die Bügelfederung zumindest einen Pneumatikzylinder (6) aufweist, der einen Zylinder (7), der mit dem Rahmen (51) einstückig ausgebildet ist, und einen Kolben (8) aufweist, der mit dem Bügel (52) einstückig ausgebildet ist und verschiebbar in dem Zylinder (7) angebracht ist, um das Volumen des Zylinders (7) in einer obere, pneumatische Kammer (61) und eine untere, pneumatische Kammer (62) zu teilen, wobei jede pneumatische Kammer (61, 62) ein Gas unter Druck aufweist, um die Bewegung des Kolbens (8) zu dämpfen.

**2.** Stromabnehmer nach Anspruch 1, wobei mindestens eine der pneumatischen Kammern (61,62) eine mechanische Feder (63, 64) umfasst.

**3.** Stromabnehmer nach Anspruch 2, wobei die mechanische Feder (63, 64) frei in der pneumatischen Kammer (61, 62) angebracht ist.

**4.** Stromabnehmer nach einem der Ansprüche 2 bis 3, wobei die mechanische Feder (63, 64) eine Steifigkeit zwischen 500 und 1500 N/m, vorzugsweise von genau 600 N/m, aufweist.

**5.** Stromabnehmer nach einem der Ansprüche 1 bis 4, wobei zumindest eine der pneumatischen Kammern (61, 62) mindestens eine pneumatische Einspeisungsöffnung umfasst (71, 72), die im Zylinder (7) vorgesehen ist.

**6.** Stromabnehmer nach einem der Ansprüche 1 bis 5, wobei der pneumatische Druck im Pneumatikzylinder (6) so konfiguriert ist, um eine vorbestimmte Kontaktkraft (Fmoy) auf den Kontaktdraht (3) auszuüben.

**7.** Stromabnehmer nach Anspruch 6, wobei der Kolben (8) an einer Referenzposition (d0) in dem Zylinder (7) für die vorbestimmte Kontaktkraft (Fmoy) ist, wobei der Pneumatikzylinder (6) so konfiguriert ist, um pneumatisch eine Verschiebung des Kolbens (8) um seine Referenzposition (d0) auf einem zentralen Bereich (P0) der vorbestimmten Verschiebung zu dämpfen.

**8.** Stromabnehmer gemäß Anspruch 7, wobei der Pneumatikzylinder (6) so konfiguriert ist, um auf pneumatische und mechanische Weise eine Verschiebung des Kolbens (8) außerhalb des zentralen Bereichs (P0) der vorbestimmten Verschiebung zu dämpfen.

**9.** Stromabnehmer nach einem der Ansprüche 1 bis 8, wobei der Stromabnehmer (5) eine pneumatische Federung des Rahmens (53) aufweist, die eingerichtet ist, den Rahmen (51) mit Bezug auf das Schienenfahrzeug zu verschieben, wobei der Stromabnehmer (5) eine erste pneumatische Schaltung (54) aufweist, die die pneumatische Federung des Rahmens (53) mit dem Pneumatikzylinder (6) verbindet.

**10.** Stromabnehmer nach einem der Ansprüche 1 bis 9, wobei der Bügel (52) eine pneumatische Vorrichtung (55) zur Stoßerfassung aufweist, wobei der Stromabnehmer (5) eine zweite pneumatische Schaltung (56) aufweist, die die pneumatische Vorrichtung (55) zur Stoßerfassung mit dem Pneumatikzylinder (6) verbindet.

**Claims**

**1.** Pantograph (5) for transmitting electric energy between a contact wire (3) and a railway vehicle (1), the pantograph (5) comprising at least one framework (51) intended to be mounted on the railway vehicle (1), a bow (52) intended to come into contact with the contact wire (3) and a bow suspension mounted between the framework (51) and said bow (52), the pantograph being **characterised in that** the bow suspension comprises at least one pneumatic actuator (6) comprising a cylinder (7) which is rigidly connected to the framework (51), and a piston (8) which is rigidly connected to the bow (52) and mounted in translation within said cylinder (7) so as to divide the volume of the cylinder (7) between an upper pneumatic chamber (61) and a lower pneumatic chamber (62), each pneumatic chamber (61, 62) comprising a pressurised gas which damps the movement of the piston (8).

**2.** Pantograph according to claim 1, wherein at least one of the pneumatic chambers (61, 62) comprises a mechanical spring (63, 64).

**3.** Pantograph according to claim 2, wherein said mechanical spring (63, 64) is freely mounted in said pneumatic chamber (61, 62).

**4.** Pantograph according to either claim 2 or claim 3, wherein said mechanical spring (63, 64) has a rate of between 500 and 1500 N/m, preferably equal to 600 N/m.

**5.** Pantograph according to any of claims 1 to 4, wherein at least one of said pneumatic chambers (61, 62) comprises at least one pneumatic supply opening (71, 72) provided in said cylinder (7).

**6.** Pantograph according to any of claims 1 to 5, wherein the pneumatic pressure in the pneumatic actuator (6) is set so as to exert a predetermined contact force (Fmoy) on the contact wire (3).

**7.** Pantograph according to claim 6, wherein, since the piston (8) is at a reference position (d0) in said cylinder (7) for said predetermined contact force (Fmoy), the pneumatic actuator (6) is designed to pneumatically damp a movement of the piston (8) about its reference position (d0) over a predetermined central movement range (P0).

**8.** Pantograph according to claim 7, wherein the pneumatic actuator (6) is designed to pneumatically and mechanically damp a movement of the piston (8) which does not fall within the predetermined central movement range (P0).

**9.** Pantograph according to any of claims 1 to 8, wherein, since the pantograph (5) comprises a pneumatic framework suspension (53) arranged so as to move the framework (51) with respect to the railway vehicle (1), the pantograph (5) comprises a first pneumatic circuit (54), which connects the pneumatic framework suspension (53) to the pneumatic actuator (6).

**10.** Pantograph according to any of claims 1 to 9, wherein, since the bow (52) comprises a pneumatic shock detection device (55), the pantograph (5) comprises a second pneumatic circuit (56), which connects the pneumatic shock detection device (55) to the pneumatic actuator (6).

Figure 1

Figure 2

Figure 3

F

3

52   55
56
6
54   512
51
53   511

5

<u>1</u>

# Figure 4

52

81   9
73   10
63
71
P
61
6
8   84
11   83
82   7
62
74   51
64

# Figure 6

Figure 5A

Figure 5B

EP 2 699 445 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2883809 A1
- FR 2740741 B1
- US 5954171 A
- AT 219652 B
- DE 1076532 B
- GB 1437670 A